# EUROPÄISCHE PATENTSCHRIFT

(11) **EP 0 412 954 B1**
(45) Veröffentlichungstag und Bekanntmachung des Hinweises auf die Patenterteilung: **04.08.1993**
(21) Anmeldenummer: 90890224.0
(22) Anmeldetag: 25.07.1990
(51) Int. Cl.: H02K 5/15, H02K 5/173, H02K 15/16

(54) **Lagerschild für einen Elektromotor**
Bearing shield for an electric motor
Flasque-palier pour un moteur électrique

(30) Priorität: 09.08.1989 AT 1910/89
(43) Veröffentlichungstag der Anmeldung: 13.02.1991
(73) Patentinhaber: AUSTRIA Antriebstechnik G. Bauknecht Aktiengesellschaft, 8740 Zeltweg-Spielberg (Steiermark) (AT)
(72) Erfinder: Egger, Otto, Ing., A-8911 Admont, Steiermark (AT)
(74) Vertreter: Beer, Manfred, Dipl.-Ing.

(56) Entgegenhaltungen:
- EP-A- 0 023 609
- DE-A- 2 430 093
- DE-U- 8 507 895
- FR-A- 1 085 443
- FR-A- 2 060 901
- GB-A- 2 018 042
- US-A- 3 900 234

## Beschreibung

Die Erfindung betrifft einen Lagerschild, insbesondere aus Leichtmetall-Druckguß für Elektromotoren mit einem äußeren Ring für den Einpaß des Stators und einem mit dem äußeren Ring über Stege verbundenen inneren Ring, der den Sitz für das Lager des Rotors des Elektromotors bildet, wobei an der dem Außenring des Lagers zugekehrten Fläche des inneren Ringes in Richtung der Rotorachse verlaufende, mit dem Lagerschild einstückig ausgebildete Rippen vorgesehen sind.

Derartige Lagerschilde werden aus Aluminium oder Aluminiumlegierungen im Druckgußverfahren hergestellt (vgl. US-PS 4 777 395).

Da bei der Herstellung im Druckgußverfahren keine zur späteren Drehachse exakt zylinderförmigen Flächen hergestellt werden können - die Flächen müssen, damit der Gußkörper aus der Form entnommen werden kann, leicht konisch ausgebildet sein (Ausformschräge)- ist es erforderlich, die Sitz- und Paßflächen für das Statorpaket bzw. das Lager des Rotors spanabhebend durch Ausdrehen nachzuarbeiten.

Dieses Ausdrehen ist ein gesonderter, vom Druckgußvorgang unabhängiger Arbeitsvorgang, der eine Späneabsaugung und/oder einen Waschvorgang nach Ausführung der Dreharbeit erfordert. In der US-PS 4 777 395 wird daher auch vorgeschlagen, den Lagerschild als Blechpreßteil auszuführen.

Aus der AU-PS 13 290/83 ist ein Elektromotor bekannt, der zwei Lagerschilde besitzt, zwischen welchen das Statorpaket des Elektromotors aufgenommen ist, und in die weiters die Kugellager für die Lagerung der Rotorwelle eingesetzt sind. An den Lagerschilden sind im Statorbereich Rippen vorgesehen, wobei sowohl die nach außen weisenden Rippen als auch die nach innen weisenden Rippen einfache Verstärkungsrippen sind. Bei der Konstruktion des Elektromotors gemäß der AU-PS 13 290/83 greifen die beiden Lagerschilde lediglich mit ihren einander zugekehrten Rändern an den Randkanten des Statorpaketes an. Irgendwelche besonderen Maßnahmen, das Statorpaket gegenüber den Lagerschilden zu zentrieren, sind der AU-PS 13 290/83 nicht zu entnehmen.

In die Aufnahme für das Lager der Rotorwelle ist bei der AU-PS 13 290/83 ein Paßring aus federelastischem Werkstoff eingesetzt. Dieser Paßring trägt an seiner Innenseite Vorsprünge, die an der Außenfläche des äußeren Ringes des Rotorlagers angreifen. Der AU-PS 13 290/83 sind keine Hinweise darauf zu entnehmen, daß die Vorsprünge am Paßring vor dem Einsetzen des Lagers kalibriert werden sollen.

Aus der US-PS-3 900 234 ist ein Lagerschild bekannt, das aus Aluminium durch Gießen hergestellt werden kann. Dieses bekannte Lagerschild besitzt einen Ring, in den das Lager des Rotors aufgenommen ist, und Stege, deren freie Enden am Statorpaket abgestützt sind. Die Innenfläche des Ringes ist mit in Richtung der Rotorachse verlaufenden Rippen versehen. So kann das Lager für den Rotor ohne Bearbeitung in den Ring eingepreßt werden.

Der Erfindung liegt die Aufgabe zugrunde, einen Lagerschild der eingangs genannten Gattung, insbesondere einen Lagerschild, der beispielsweise im Druckgußverfahren aus einer Aluminiumlegierung oder im Spritzgußverfahren aus kunststoff hergestellt werden kann, derart weiterzubilden, daß der Drehvorgang zum Herstellen der Paß- bzw. Sitzflächen für den Stator und das Lager entbehrlich ist.

Erfindungsgemäß wird dies dadurch erreicht, daß am äußeren Ring an dessen dem Stator zugekehrter Innenfläche in Richtung der Rotorachse verlaufende, mit dem Lagerschild einstückig ausgebildete Rippen vorgesehen sind und daß an den radial äußeren Enden der Stege auf die Stirnfläche des Stators hin vorstehende, mit dem Lagerschild einstückig ausgebildete Noppen vorgesehen sind.

Durch die erfindungsgemäße Ausbildung des beispielsweise im Aluminiumdruckgußverfahren hergestellten Lagerschildes ist es nicht mehr notwendig, den Zentriereinpaß für das Statorpaket und den Lagersitz nach dem Druckgießen auf die erforderlichen Abmessungen spanabhebend zu bearbeiten. Vielmehr liegt der Erfindung die Erkenntnis zugrunde, daß auf Grund der erfindungsgemäßen Ausbildung des Lagerschildes mit den Rippen die erforderlichen Zentriereinpässe für den Stator und die Kugellagersitze durch einen einfachen Kalibriervorgang, ohne spanabhebende Bearbeitung gestaltet werden können.

Die Kalibrierung erfolgt beispielsweise mit Hilfe eines Kalibrierwerkzeuges (Hartmetallwerkzeug od. dgl.), das in einem Arbeitsgang den Kugellagersitz sowie den Zentriereinpaß für das Statorpaket kalibriert. Hiezu wird das Kalibrierwerkzeug axial in bzw. durch das Lagerschild gedrückt, wodurch die endgültige Formgebung von Kugellagersitz und Statorzentriereinpaß in einem Arbeitsgang erfolgt. Dabei ist durch die mögliche einstückige Ausbildung des Kalibrierwerkzeuges nicht nur eine gleichzeitige Kalibrierung des Kugellagersitzes und des Statorzentriereinpasses gewährleistet, sondern auch deren absolute Koaxialität gesichert, so daß der Kugellagersitz. und der Statoreinpaß genau koaxial sind.

Die erfindungsgemäße Ausgestaltung hat auch den Vorteil, daß nicht nur eine optimale Geometrieanpassung erzielt wird, sondern daß beim Verformen der Rippen im Kalibrierschritt eine Materialverdichtung bzw. Materialverdrängung erfolgt, so daß sich eine Glättung der Zentrierflächen ergibt, die exakter und glatter ist als die beim Drehen erreichbare.

Die erfindungsgemäß vorgesehenen Rippen haben den Vorteil, daß diese beim Druckgießen auch ohne Ausformschräge hergestellt werden können, da sie eine nur kleine Fläche einnehmen, so daß beim anschließenden Kalibriervorgang, der insbesondere trocken, d.h. ohne Beigabe von Schmieröl oder einer Emulsion ausgeführt werden kann, nur mehr wenig Werkstoff verdichtet bzw. verdrängt werden muß.

Ein Vorteil des erfindungsgemäßen Lagerschildes besteht noch darin, daß der Kalibriervorgang ohne weiteres in den Herstellungsablauf, insbesondere Montageablauf des Elektromotors integriert werden kann, da keine zusätzliche Späneabsaugung oder gar ein Waschvorgang notwendig ist. So besteht die Möglichkeit, den Kalibriervorgang mit der Arbeitsweise der Druckgußmaschine zu verketten, so daß der fertige Lagerschild ohne zusätzlichen Arbeitsvorgang von der Druckgußmaschine anfällt.

Durch die Gestaltung der Zentrierstege bzw. Rippen hinsichtlich ihrer Anzahl, Breite, Abmessungen und Form können für die verschiedensten Lagerschildausführungen optimale Geometrieformen für Lagersitz und Statorpaketeinpaß erreicht werden.

Die an den radial äußeren Enden der Stege auf die Stirnfläche des Stators hin vorstehenden Noppen dienen als Axialanschlag für das Statorpaket im Lagerschild. Die axial ausgerichteten Noppen werden beim Montagevorgang durch axial wirkende Kräfte verprägt. Dies hat den Vorteil, daß ein Ausgleich des Statorpaketschiefstandes bewirkt wird und Statorpakethöhentoleranzen ebenfalls ausgeglichen werden.

Zusätzlich haben diese Noppen den vorteilhaften Effekt, daß der isolierende Lack- oder kunstharzauftrag an der Statorpaketstirnseite durchgedrückt wird und eine elektrisch leitende Metall- Metall-kontaktierung zwischen dem Statorpaket und dem Lagerschild hergestellt wird, so daß eine einfache Erdung (Schutzleiteranschluß) genügt.

In einer Ausführungsform der Erfindung ist vorgesehen, daß die Noppen zu den Stegen symmetrisch angeordnet sind. Durch diese Maßnahme ergibt sich eine gleichmäßige Belastung, wenn wie in der Regel mehrere Noppen vorgesehen sind.

Eine erfindungsgemäß bevorzugte Ausführung ist dadurch gekennzeichnet, daß die Noppen an den Enden der Stege und die Rippen am äußeren Ring im Bereich der im äußeren Ring vorgesehenen Löcher für die Motorverschraubung angeordnet sind. Durch die Anordnung der Zentrierrippen und der axialen Noppen im Bereich der Bolzen der Motorverschraubung ergibt sich der Vorteil, daß durch die auftretenden Verschraubungskräfte und Haltekräfte keine Verformungen des Lagerschildes selbst auftreten.

Eine Ausführungsform kann erfindungsgemäß dadurch gekennzeichnet sein, daß die Noppen im wesentlichen kegelförmig ausgebildet sind. Die kegelförmige Ausführung der Noppen ergibt einen angemessenen Verformungsweg bei einer angemessenen anzuwendenden Verformungsarbeit, ohne daß hohe, das Leichtmetallagerschild unter Umständen verformende, Kräfte aufgebracht werden müssen.

Die Erfindung erstreckt sich auch darauf, daß die Rippen am äußeren Ring abgeflachte, zur Mitte des äußeren Ringes hin weisende Flächen und eine etwa rechteckige Querschnittsform aufweisen. Durch diese Maßnahme ergibt sich eine flächige Anlage der Rippen an der Außenumfangsfläche des Statorpaketes, ohne daß beim kalibrieren im Bereich der Rippen erhebliche Verformungsarbeit notwendig ist.

Gemäß der Erfindung kann sich der Lagerschild auch dadurch auszeichnen, daß die Flächen der Rippen am äußeren Ring einen dem Stator benachbarten Abschnitt, der zur Mitte des äußeren Ringes ansteigt, dann einen parallel zur Achse des Rotors ausgerichteten Abschnitt und schließlich einen zur Mitte des äußeren Ringes hin ansteigenden Abschnitt aufweisen.

Bevorzugt ist im Rahmen der Erfindung, daß die Endflächen der Rippen am inneren Ring parallel zur Achse des Motors ausgerichtet sind und eine zur inneren kante des inneren Ringes hin führende Abschrägung aufweisen.

Die Ausbildung der Flächen der Rippen in dieser Form erleichtert das Einführen des Kalibrierwerkzeuges beim Kalibriervorgang und vereinfacht später beim Zusammenbau des Elektromotors das Einsetzen des Statorpaketes in die Lagerschilde, da schräge Einführungsflächen vorgesehen sind.

Wenn gemäß einem Vorschlag der Erfindung vorgesehen ist, daß die Rippen am inneren Ring über dessen Umfang, gegebenenfalls zu Gruppen zusammengefaßt, gleichmäßig verteilt angeordnet sind, ergibt sich nicht nur ein sicherer Sitz des Lagers für die Rotorwelle, sondern auch eine gleichmäßige Belastung des inneren Ringes.

Eine bevorzugte Ausführungsform des Lagerschildes ist dadurch gekennzeichnet, daß am inneren Ring in dessen Innenraum vorspringende Anschläge für die axiale Ausrichtung des Lagers des Rotors vorgesehen sind. Die Anordnung von vorspringenden Anschlägen ergibt gegenüber einem durchgehenden Anschlagring für die achsiale Ausrichtung des Lagers des Rotors eine Materialeinsparung.

Weitere Einzelheiten und Merkmale der Erfindung ergeben sich aus der nachstehenden Beschreibung des in den Zeichnungen wiedergegebenen Ausführungsbeispieles.

Es zeigt:
Fig. 1 im Axialschnitt einen Elektromotor, bei dem der links angeordnete Lagerschild gemäß der Erfindung ausgebildet ist,
Fig. 2 eine Einzelheit II von Fig. 1,
Fig. 3 einen Lagerschild von rechts der Fig. 1 (innen) gesehen,
Fig. 4 teilweise den Lagerschild aus Fig. 3 im Radialschnitt (Linie IV-IV in Fig. 3) und
Fig. 5 eine weitere Einzelheit des Lagerschildes im Schnitt längs der Linie V-V in Fig. 3.

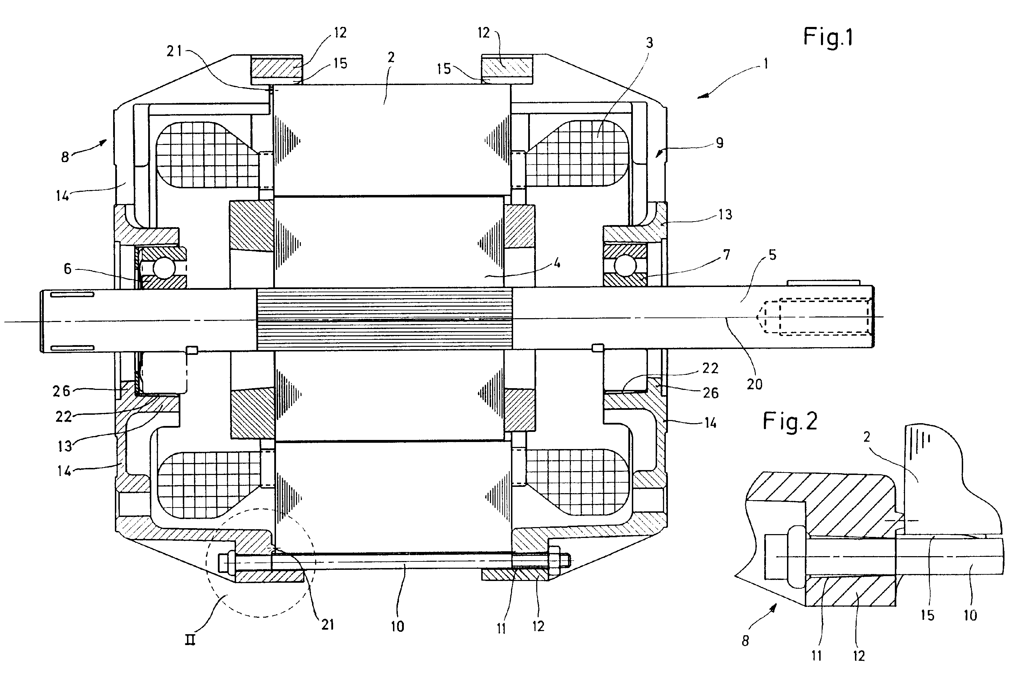

Ein in Fig. 1 gezeigter Elektromotor 1 weist ein Statorpaket 2 mit den entsprechenden Wicklungen 3, einen Rotor 4, der über seine Rotorwelle 5 und Kugellager 6 und 7 in Lagerschilden 8 und 9, die auf beiden Seiten des Statorpaketes 2 angesetzt und mit Hilfe von Zugschrauben 10 miteinander verbunden sind, auf. Die Zugschrauben 10 durchsetzen Bohrungen 11 in äußeren Ringen 12 der Lagerschilde 8 und 9, wogegen die Kugellager 6 und 7 in inneren Ringen 13 der Lagerschilde 8 und 9 aufgenommen sind. Die Ringe 12 und 13 der Lagerschilde 8 bzw. 9 sind miteinander durch radial verlaufende Stege 14 verbunden.

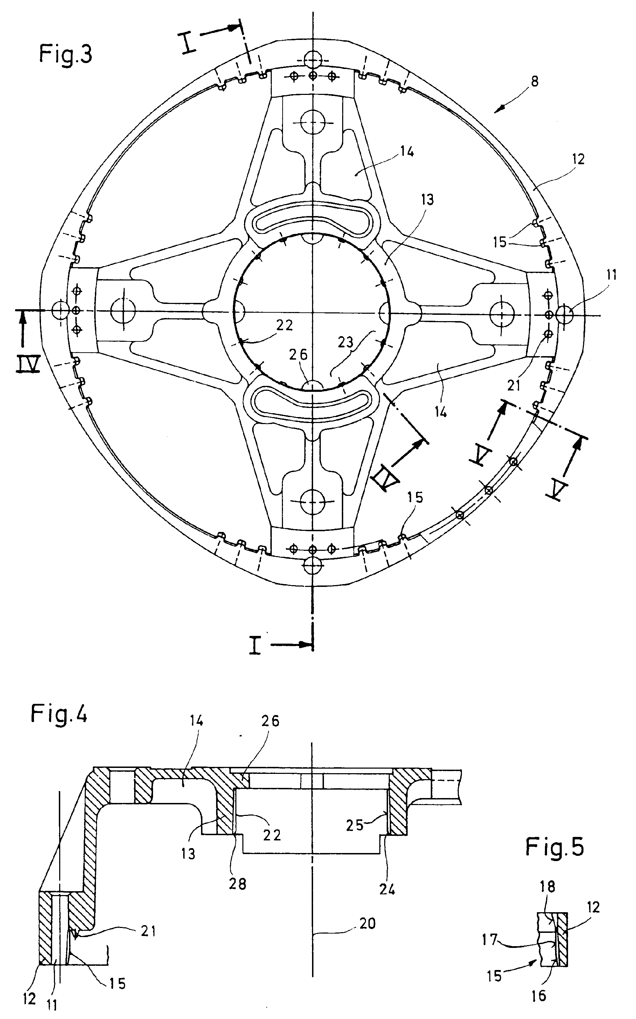

Wie insbesondere die Fig. 3 und 4 zeigen, sind an der im wesentlichen kreisrunden Innenfläche des äußeren Ringes 12 zu beiden Seiten der radial äußeren Enden der Stege 14 jeweils drei Rippen 15, die auf das Zentrum des Lagerschildes 8 zu vorspringen, angeordnet.

Diese Rippen 15 haben die in Fig. 4 gezeigte Form und einen etwa rechteckförmigen Querschnitt, wenn der Lagerschild 8 aus der Druckgußmaschine entnommen wird. Die Form der Rippen 15 setzt sich aus einem schräg nach innen verlaufenden Abschnitt 16, einem etwa parallel zur Achse 20 des Lagerschildes 8 und damit des Rotors 4 verlaufenden Abschnitt 17 und einem nach innen vorspringenden Abschnitt 18 zusammen (Fig. 5). Die dem Zentrum des Lagerschildes 8 zugekehrten Flächen der Abschnitte 16, 17 und 18 sind im übrigen im wesentlichen eben ausgebildet (Fig. 3).

In den Fig. 3 und 4 ist gezeigt, daß im Bereich der radial äußeren Enden der Stege 14 symmetrisch zu den Löchern 11 im äußeren Ring 12 für die Aufnahme der Verbindungsschrauben 10 angeordnete, in Achsrichtung vorspringende Noppen 21 mit im wesentlichen kegelförmiger Gestalt vorgesehen sind.

An der Innenfläche des inneren Ringes 13 des Lagerschildes 8 sind ebenfalls Rippen 22 vorgesehen, die über den Umfang der Innenfläche des inneren Ringes 13 gleichmäßig verteilt angeordnet sind. Die gleichmäßige Verteilung der Rippen 22 kann auch darin bestehen, daß jeweils Gruppen von Rippen 22 mit weiteren Gruppen gleichmäßig über den Umfang der Innenumfangsfläche des Ringes 13 verteilt angeordnet sind. So sind im gezeigten Ausführungsbeispiel vier Gruppen 23 zu je drei Rippen 22 über die Innenfläche des Ringes 13 verteilt angeordnet.

Die Rippen 22 am Ring 13 haben bis auf eine Einlaufschräge 24 zur Achse 20 parallele Flächen 25, die etwa eben ausgebildet sind, und besitzen eine im wesentlichen rechteckförmigen Querschnittsform.

An der Innenfläche des Ringes 13 sind vier nach innen vorspringende Anschläge 26 vorgesehen, an welchen das in den Ring 13 eingesetzte Lager 6, gegebenenfalls unter Zwischenfügung einer Distanz- oder Schutzscheibe, anliegt.

Wie erwähnt, wird der Lagerschild 8 einer Leichtmetalldruckgußmaschine (insbesondere Aluminiumdruckguß oder Aluminiumlegierungsdruckguß) oder der Spritzgußmaschine mit der in den Fig. 3, 4 und 5 gezeigten Form entnommen. Vor dem Zusammenbau des Elektromotors 1 werden die Rippen 15 und 22 mit Hilfe des weiter oben beschriebenen Kalibrierwerkzeuges vorzugsweise in einem einzigen Arbeitsgang kalibriert, so daß die dann nach dem Kalibriervorgang gebildeten, zur Achse 20 hin weisenden Flächen der Rippen 15 und 22 entlang zueinander und zur Achse 20 genau koaxial ausgerichteter Zylindermantelteilflächen ausgerichtet sind (vgl. Fig. 2). An den so kalibrierten Flächen der Rippen 15 liegt das Statorpaket 2 mit seiner Außenumfangsfläche im Stirnbereich an, wie dies in Fig. 2 gezeigt ist.

Der Außenring des Kugellagers 6, der in den inneren Ring 13 des Lagerschildes 8 eingesetzt ist, wird durch die kalibrierten Flächen 25 der Rippen 22 am inneren Ring 13 genau zentriert gehalten.

Nach dem Zusammenbau wird der Motor 1 mittels einer Presse über die Lagerschilde und 9 zusammengepreßt und die Spannschrauben 10 angezogen. Dadurch werden die Noppen 21 an den radial äußeren Enden der Stege 14 beider Lagerschilde 8 mehr oder weniger stark in die in Fig. 2 gezeigte Form verformt werden. Dadurch werden Ungenauigkeiten des aus Blechlamellen bestehenden Statorpaketes 2 ausgeglichen und dennoch ein exakter Sitz des Lagerschildes 8 am Statorpaket 2, nämlich ein zur Achse 20 genau ausgerichteter Sitz, gewährleistet. Noppen 21, die an Stellen angeordnet sind, wo das Statorpaket 2 über seine Idealform vorspringt, werden stärker verformt als Noppen 21, die an Stellen angeordnet sind, wo das Statorpaket weniger stark vorspringt oder unter seine Idealform zurückspringt.

## Patentansprüche

1. Lagerschild (8), insbesondere aus Leichtmetall-Druckguß, für Elektromotoren (1), mit einem äußeren Ring (12) für den Einpaß des Stators (2) und einem mit dem äußeren Ring (12) über Stege (14) verbundenen inneren Ring (13), der den Sitz für das Lager (6) des Rotors (4) des Elektromotors (1) bildet, wobei an der dem Außenring des Lagers (6) zugekehrten Fläche des inneren Ringes (13) in Richtung der Rotorachse (20) verlaufende, mit dem Lagerschild (8) einstückig ausgebildete Rippen (22) vorgesehen sind, dadurch gekennzeichnet, daß am äußeren Ring (12) an dessen dem Stator (2) zugekehrter Innenfläche in Richtung der Rotorachse (20) verlaufende, mit dem Lagerschild (8) einstückig ausgebildete Rippen (15) vorgesehen sind und daß an den radial äußeren Enden der Stege (14) auf die Stirnfläche des Stators (2) hin vorstehende, mit dem Lagerschild (8) einstückig ausgebildete Noppen (21) vorgesehen sind.

2. Lagerschild nach Anspruch 1, dadurch gekennzeichnet, daß die Rippen (15) am äußeren Ring (12) bezüglich der Stege (14) symmetrisch angeordnet sind.

3. Lagerschild nach Anspruch 1 oder 2, dadurch gekennzeichnet, daß die Noppen (21) zu den Stegen (14) symmetrisch angeordnet sind.

4. Lagerschild nach einem der Ansprüche 1 bis 3, dadurch gekennzeichnet, daß die Noppen (21) an den Enden der Stege (14) und die Rippen (15) am äußeren Ring (12) im Bereich der im äußeren Ring (12) vorgesehenen Löcher (11) für die Motorverschraubung (10) angeordnet sind.

5. Lagerschild nach einem der Ansprüche 1 bis 4, dadurch gekennzeichnet, daß die Noppen (21) im wesentlichen kegelförmig ausgebildet sind.

6. Lagerschild nach einem der Ansprüche 1 bis 5, dadurch gekennzeichnet, daß die Rippen (15) am äußeren ring (12) abgeflachte, zur Mitte des äußeren Ringes (12) hin weisende Flächen (16, 17, 18) und eine etwa rechteckige Querschnittsform aufweisen.

7. Lagerschild nach Anspruch 6, dadurch gekennzeichnet, daß die Flächen der Rippen (15) am äußeren ring (12) einen dem Stator (2) benachbarten Abschnitt (16), der zur Mitte des äußeren Ringes (12) ansteigt, dann einen parallel zur Achse (20) des Rotors (4) ausgerichteten Abschnitt (17) und schließlich einen zur Mitte des äußeren Ringes (12) hin ansteigenden Abschnitt (18) aufweisen.

8. Lagerschild nach einem der Ansprüche 1 bis 7, dadurch gekennzeichnet, daß die rippen (22) am inneren Ring (13) einen rechteckigen Querschnitt mit abgeflachten, zur Mitte des inneren Ringes (13) hin weisenden Flächen (25) aufweisen.

9. Lagerschild nach Anspruch 8, dadurch gekennzeichnet, daß die Endflächen (25) der rippen (22) am inneren ring (13) parallel zur Achse (20) des Motors (4) ausgerichtet sind und eine zur inneren Kante (28) des inneren Ringes (13) hin führende Abschrägung (24) aufweisen.

10. Lagerschild nach einem der Ansprüche 1 bis 9, dadurch gekennzeichnet, daß die rippen (22) am inneren Ring (13) über dessen Umfang, gegebenenfalls zu Gruppen (23) zusammengefaßt, gleichmäßig verteilt angeordnet sind.

11. Lagerschild nach einem der Ansprüche 1 bis 10, dadurch gekennzeichnet, daß am inneren Ring (12) in dessen Innenraum vorspringende Anschläge (26) für die axiale Ausrichtung des Lagers (6) des Rotors (4) vorgesehen sind.

## Claims

1. A bearing cover (8), especially a light metal injection moulding, for electric motors (1) with an outer ring (12) for the stator (2) to fit in and an inner ring (13) connected to the outer ring (12) by webs (14) and which forms the seat for the bearing (6) of the rotor (4) of the electric motor (1), wherein ribs (22) formed in one piece with the bearing cover (8) are provided on the surface of the inner ring (13) facing the outer ring of the bearing (6), running in the direction of the rotor axis (20), characterized in that ribs (15) formed in one piece with the bearing cover (8) are provided on the outer ring (12) on its inner surface facing the stator (2), running in the direction of the rotor axis (20), and in that pips (21) formed in one piece with the bearing cover (8) are provided on the radially outer ends of the webs (14), projecting towards the end face of the stator (2).

2. A bearing cover according to claim 1, characterized in that the ribs (15) on the outer ring (12) are arranged symmetrically relative to the webs (14).

3. A bearing cover according to claim 1 or 2, characterized in that the pips (21 ) are arranged symmetrically relative to the webs (14).

4. A bearing cover according to any of claims 1 to 3, characterized in that the pips (21) on the ends of the webs (14) and the ribs (15) on the outer ring (12) are arranged in the region of holes (11) provided in the outer ring (12) for screwing (10) on to the motor.

5. A bearing cover according to any of claims 1 to 4, characterized in that the pips (21) are substantially conical in shape.

6. A bearing cover according to any of claims 1 to 5, characterized in that the ribs (15) on the outer ring (12) have flatted surfaces (16, 17, 18) facing the centre of the outer ring (12) and an approximately rectangular cross-section.

7. A bearing cover according to claim 6, characterized in that the surfaces of the ribs (15) on the outer ring (12) comprise a section (16) adjacent the stator (2) which slopes up towards the centre of the outer ring (12), then a section (17) running parallel to the axis (20) of the rotor (4) and finally a section (18) sloping up towards the centre of the outer ring (12).

8. A bearing cover according to any of claims 1 to 7, characterized in that the ribs (22) on the inner ring (13) have a rectangular cross-section, with flatted surfaces (25) facing towards the centre of the inner ring (13).

9. A bearing cover according to claim 8, characterized in that the end surfaces (25) of the ribs (22) on the inner ring (13) are aligned parallel to the axis (20) of the motor [rotor] (4) and have a bevel (24) leading into the inner edge (28) of the inner ring (13).

10. A bearing cover according to any of claims 1 to 9, characterized in that the ribs (22) on the inner ring (13) are uniformly distributed over the periphery of the inner ring (13), if desired in groups (23).

11. A bearing cover according to any of claims 1 to 10, characterized in that stops (26) are provided on the inner ring (12) [13], projecting into its inner space for axial alignment of the bearing (6) of the rotor (4).

## Revendications

1. Flasque (8), en particulier en métal léger coulé sous pression pour moteurs électriques (1), comportant une bague extérieure (12) pour l'adaptation du stator (2) et une bague intérieure (13) qui est reliée au moyen d'entretoises (14) à la bague extérieure et qui forme le logement pour le palier (6) du rotor (4) du moteur électrique (1), sur la face de la bague intérieure (13), tournée ves la bague extérieure du palier (6) étant prévues des nervures (22) ne formant qu'une seule pièce avec la flasque (8), caractérisé en ce que, sur la face interne tournée vers le stator (2) de la bague extérieure (12), sont prévues des nervures (15) ne formant qu'une seule pièce avec le flasque (8) et dirigées vers l'axe (20) du rotor, et en ce que, sur la face de la bague intérieure 13, tournée vers la bague extérieure du palier (6), et en ce que, sur les extrémités radiales externes des entretoises (14) sont prévues des noppes (21) ne formant qu'une seule pièce avec le flasque (8) et qui font saillie vers la surface extérieure du stator (2).

2. Flasque suivant la revendication 1, caractérisé en ce que les nervures (15) de la bague extérieure (12) sont disposées de façon symétrique par rapport aux entretoises (14).

3. Flasque suivant la revendication 1 ou 2, caractérisé en ce que les noppes (21) sont disposées de façon symétrique par rapport aux entretoises (14).

4. Flasque suivant une des revendications 1 à 3, caractérisé en ce que les noppes (21) aux extrémités des entretoises (14) et les nervures (15) de la bague extérieure sont disposées dans la zone des trous (11) prévus dans la bague extérieure (12) pour l'assemblage par boulons (10) du moteur.

5. Flasque suivant une des revendications 1 à 4, caractérisé en ce que les noppes (21) sont essentiellement coniques.

6. Flasque suivant une des revendications 1 à 5, caractérisé en ce que les nervures (15) de la bague extérieure (12) présentent des faces aplaties (16, 17, 18) vers le centre de la bague extérieure (12) et une section approximativement de forme rectangulaire.

7. Flasque suivant la revendication 6, caractérisé en ce que les faces des nervures (15) de la bague extérieure (12) présentent une première section (16) voisine du stator qui va en montant vers le centre de la bague extérieure (12), une section (17) qui est alignée parallèle à l'axe (20) du rotor (4), et une section (18) qui va en montant vers le centre de la bague extérieure (12).

8. Flasque suivant une des revendications 1 à 7, caractérisé en ce que les nervures (22) de la bague intérieure (13) présentent une section rectangulaire avec des faces aplaties (25) vers le centre de la bague intérieure (13).

9. Flasque suivant la revendication 8, caractérisé en ce que les faces d'extrémité (25) des nervures (22) de la bague intérieure (13) sont alignées parallèlement à l'axe (20) du moteur (4) et présentent une inclinaison (24) qui va vers le bord interne (28) de la bague intérieure (13).

10. Flasque suivant une des revendications 1 à 9, caractérisé en ce que les nervures (22) de la bague intérieure (13) sont, le cas échéant, réunies en groupes, uniformément réparties sur la circonférence de celle-ci.

11. Flasque suivant une des revendications 1 à 10, caractérisé en ce que, sur la bague intérieure (12), sont prévues des butées (26), en saillie vers l'intérieur de celle-ci, pour l'alignement axial du palier (6) du rotor (4).
